Europäisches Patentamt

European Patent Office

Office européen des brevets

(11) Veröffentlichungsnummer : **0 178 578**
**B1**

(12) **EUROPÄISCHE PATENTSCHRIFT**

(45) Veröffentlichungstag der Patentschrift :
03.01.90

(51) Int. Cl.$^5$ : **G 11 B  7/24**, G 11 B  7/26

(21) Anmeldenummer : 85112785.2

(22) Anmeldetag : 09.10.85

(54) Verfahren zur Herstellung eines irreversiblen optischen Mediums zur Informationsspeicherung.

(30) Priorität : 13.10.84 DE 3437657

(43) Veröffentlichungstag der Anmeldung :
23.04.86 Patentblatt 86/17

(45) Bekanntmachung des Hinweises auf die Patenterteilung : 03.01.90 Patentblatt 90/01

(84) Benannte Vertragsstaaten :
DE FR GB NL

(56) Entgegenhaltungen :
EP--A-- 0 025 253
EP--A-- 0 083 396
NL--A-- 8 303 895
US--A-- 3 889 272
PATENTS ABSTRACTS OF JAPAN, Band 7, Nr. 169
(M-231) [1314], 26. Juli 1983; & JP - A - 58 74 392
(NIPPON SHINKU GIJUTSU K.K.) 04.05.1983
PROCEEDINGS OF SPIE - OPTICAL STORAGE
MEDIA, Arlington, Virginia, US, 6. - 10. Juni 1983,
Band 420, Seiten 344-348, SPIE, Bellingham, Washington, US; V.B. JIPSON: "The writing mechanism for
discontinuous metal films"
Die Akte enthält technische Angaben, die nach dem
Eingang der Anmeldung eingereicht wurden und die
nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Werner, Arend, Dr.
Rheinecke 14
D-6700 Ludwigshafen (DE)
Erfinder : Hibst, Hartmut, Dr.
Sternstrasse 215
D-6700 Ludwigshafen (DE)
Erfinder : Schomann, Klaus Dieter, Dr.
Kopernikusstrasse 47
D-6700 Ludwigshafen (DE)

**Beschreibung**

Die Erfindung betrifft ein Verfahren zur Herstellung eines irreversiblen optischen Mediums zur Informationsspeicherung durch lokale Änderung der optischen Eigenschaften einer Aufzeichnungsschicht unter Einwirkung einer Lichtstrahlung mit einer Bestrahlungsstärke von 0,05 bis 10 $nJ/\mu m^2$, im wesentlichen bestehend aus einem Substrat und einer darauf aufgebrachten partikulären Aufzeichnungsschicht in einer Dicke von 0,01 bis 10 $\mu m$ aus einer dreidimensionalen Anordnung von Teilchen mit einem mittleren Teilchendurchmesser von 4 bis 40 nm sowie einer Porosität, dem Quotienten des Schichtvolumens zur Summe der Volumina aller Teilchen der Schicht, von 2 bis 100 durch thermisches Aufdampfen eines Metalls oder einer Legierung in Gegenwart eines chemisch inerten Gases auf ein Substrat.

Die irreversible optische Informationsspeicherung beruht auf der Erzeugung von nicht veränderbaren Markierungen auf einem Medium durch Lichteinwirkung. Als Lichtquelle dient ein Laserstrahl, dessen Durchmesser auf eine Größe von ca. 1 $\mu m$ fokussiert wird. Das meist plattenförmige Medium besitzt eine Aufzeichnungsschicht, deren optische Eigenschaften, vornehmlich die Reflektivität oder die Absorption, durch die Bestrahlung mit dem laser lokal verändert werden. Die Marke ist im allgemeinen ein eingebranntes Loch in der Aufzeichnungsschicht. Das Lesen der Information erfolgt ebenfalls mit einem Laser, wobei die Laserenergie aber wesentlich geringer gewählt wird als beim Schreibvorgang.

Das Aufzeichnungsmedium für die irreversible optische Informationsspeicherung besteht aus einem Substrat mit einer oder mehreren darauf aufgebrachten Schichten, von denen zumindest eine Schicht oder ein Bestandteil dieser Schicht das eingestrahlte Laserlicht absorbiert und dadurch entweder selbst eine irreversible lokale Änderung der Reflektivität erfährt oder aber die irreversible Änderung der Reflektivität einer angrenzenden Schicht bewirkt.

Ein derartiges Medium bedingt zum einen eine hohe Empfindlichkeit, damit bereits eine geringe Laserleistung zum Beschreiben ausreicht. Die hohe Empfindlichkeit erfordert geringe Wärmeverluste beim Beschreiben. Diese können durch eine geringe Wärmeleitfähigkeit der absorbierenden Schicht selbst erreicht werden. Weiterhin kann durch Einbettung der absorbierenden Schicht zwischen thermisch isolierende Zwischenschichten eine Erniedrigung der Wärmeverluste erreicht werden. Ferner muß die geschriebene Markierung einen guten Kontrast aufweisen. Hierfür ist es häufig erforderlich, die absorbierende Schicht mit einer reflektierenden Schicht zu unterlegen. Da die irreversiblen optischen Speichermedien vorzugsweise zur Archiveierung großer Datenmengen benutzt werden, ist eine lange Lebensdauer des Mediums erforderlich. Zum Schutz der Aufzeichnungsschicht gegen chemische oder mechanische Beschädigung werden diese daher normalerweise mit einem Schutz versehen. Der Schutz, der entweder aus einer Schicht besteht, die in direktem Kontakt mit den Schichten des Aufzeichnungsmediums steht oder der aus einer Abdeckung besteht, die zusammen mit dem Substrat eine sogenannte Sandwichanordnung bildet muß unterschiedliche Bedingungen erfüllen, je nachdem, ob der Schreib-Lesevorgang durch das Substrat oder durch den Schutz erfolgt. Im ersten Fall muß das Substrat für die benutzte Laserstrahlung transparent sein, im zweiten Fall muß die Schutzschicht oder die Schutzabdeckung für die benutzte Laserstrahlung transparent sein. Weiterhin müssen die irreversiblen optischen Medien eine hohe Fehlerfreiheit aufweisen und eine einfache wirtschaftliche Herstellung der Aufzeichnungsschicht ermöglichen. Es sind verschiedene irreversible optische Informationsspeichermedien bekannt, die sich in der strukturellen Ausbildung der lichtabsorbierenden Schicht, in der Einbeziehung verschiedener Unter-, Zwischen- und Deckschichten, sowie in der Art des Schreibvorganges voneinander unterscheiden.

Homogene, auch kohärent genannte Aufzeichnungsschichten bestehen zumeist aus Halbmetallen wie Te oder Se oder aus Metallen wie z. B. Au oder Ag, die in Form eines zusammenhängenden also kohärenten Filmes abgeschieden werden. Das Beschreiben mit dem Laser erfolgt, indem diese Schichten lokal soweit erhitzt werden, daß das Material aufschmilzt oder verdampft, so daß im Film ein Loch entsteht, das eine lokale Reflektivitätsveränderung zur Folge hat. Die Halbmetalle wie Te und Se haben die Vorzüge eines niedrigen Schmelzpunktes und einer geringen Wärmeleitfähigkeit, die zusammen die hohe Empfindlichkeit solcher Schichten bewirken, aber den Nachteil aufweisen, daß sie im allgemeinen gegen Korrosion sehr instabil und darüber hinaus giftig sind. Die stabilen Metalle, wie z. B. Au oder Ag haben die Nachteile eines hohen Schmelzpunktes und einer sehr guten Wärmeleitfähigkeit. Daher müssen diese Metallschichten sehr dünn gehalten werden, damit die Wärmeleitfähigkeit verschlechtert wird. Die Abscheidung dieser sehr dünnen Metallschichten erfordert jedoch einen sehr hohen Meß- und Regelaufwand. Ferner ist es sehr schwierig, diese dünnen Filme in fehlerfreie Form, d. h., ohne Poren und Löcher herzustellen. Ein weiterer Nachteil der kohärenten Aufzeichnungsschichten besteht darin, daß als notwendiger Schutz nur die kostspielige Sandwichanordnung in Frage kommt, da der Lochbildungsprozeß durch eine direkt aufgebrachte Schutzschicht behindert wird. Es ist daher vorteilhafter für eine optische Speicherung nicht kohärente, sondern partikuläre lichtabsorbierende Schichten heranzuziehen.

Die partikulären zweidimensionalen Aufzeichnungsschichten bestehen aus beliebig geformten Metall- oder Halbmetallteilchen kleiner Abmessung mit Durchmessern kleiner 1 μm, die in Form von sogenannten Inseln, d. h. die Teilchen berühren einander nicht, die Substratorberfläche bedecken. Im Gegensatz zu den kohärenten Schichten ist dabei die thermische Leitfähigkeit in der Schichtebene stark reduziert. Bei der optischen Aufzeichnung wird daher jedes Teilchen für sich vom Laserlicht aufgeheizt, was zu einer Verbesserung der Empfindlichkeit dieser Schichten führt. Charakteristisch für diese gruppe von lichtabsorbierenden Schichten ist die Tatsache, daß ein fester Zusammenhang zwischen Schichtdicke und Durchmeser der Teilchen besteht. Die Schichtdicke ist gleich dem mittleren Durchmesser der schichtbildenden Teilchen. In der US-A-4 252 890 wird eine photoempfindliche Schicht beschrieben, die aus einer Monolage von Partikeln besteht. Hierzu wird niedrigschmelzendes Material, vorzugsweise Selen so aufgebracht, daß die Schicht partikulären Charakter aufweist. Durch Bestrahlung mit einer intensiven Lichtquelle, vorzugsweise einer Xenon-Entladungslampe, verändert das Medium durch Versintern und/oder Verdampfung der Partikel seine optischen Daten. Die hohe Empfindlichkeit die zum Versintern oder Verdampfung der relativ großen Partikel mit Durchmessern von ca. 0,2 μm führt, wird aber nur bei Verwendung von Elementen mit niedrigem Schmelzpunkt erzielt, wie Selen, Tellur oder Zink. Die geringe Korrosionsstabilität dieser Materialien ist ein großer Nachteil dieser Aufzeichnungsschichten. Auch in der EP-A-00 83 396 und der WO-A 83/04330 werden Inselschichten als lichtabsorbierende Aufzeichnungsschichten für die Datenspeicherung beschrieben. Im Gegensatz zu den Schichten gemaß US-A 4 252 890 bestehen diese Schichten aus sehr kleinen Partikeln mit Durchmessern um 10 nm. Da der Teilchendurchmesser der Schichtdicke entspricht, handelt es sich hier um sehr dünne Schichten. Die extrem feinen Teilchen gewährleisten die benötigten hohen Schreibempfindlichkeiten auch im Falle der korrosionsstabilen Elemente, wie z. B. Gold. Der Schreibvorgang besteht auch hier in einem Versintern der Teilchen. Neben den Vorteilen hoher Schreibempfindlichkeit und sehr guter Langzeitstabilität weisen diese Medien mit zweidimensionaler Partikelanordnung aber auch besondere Nachteile auf. Die Verwendung der extrem kleinen Teilchen führt zu extrem dünnen Schichten, die hohe Anforderungen an den Verdampfungsprozeß im Hochvakuum stellen. Ferner ist der Inselbildungsprozeß abhängig von der darunter liegenden Schicht. Es müssen daher spezielle Unterschichten verwendet werden, zumeist dünne Kunststoffilme. Außerdem müssen bestimmte Substrattemperaturen eingestellt werden, um die Bildung von Inseln sicherzustellen. Üblicherweise wird die Inselschicht in Verbindung mit einer Reflektorschicht verwendet. Die Reflexion des Schichtsystems wird so eingestellt, daß die Restreflektivität für den Fokusservo des Laserstrahls ausreicht und der Kontrast der geschriebenen Marke zur Umgebung möglichst hoch ist. Die hierfür benötigte Erhöhung der Absoprtion der Inselschicht erfordert mehr Inseln pro Fläche. Der Inselbildungsprozeß ist aber nach Erreichen einer bestimmten Anzahl von Inseln pro Fläche abgeschlossen und die Inseln wachsen nur noch in ihrer Größe. Somit bewirkt eine Erhöhung der Absorption der Schicht in nachteiliger Weise eine Erniedrigung der Empfindlichkeit. Um dieses Problem zu vermeiden, wurden Dreifachschichtsysteme aus Reflektor, transparenter Abstandschicht und Inselschicht verwendet. Durch Variation der Dicke der Abstandsschicht läßt sich zwar die gewünschte Reflektivität erreichen, jedoch sind Dreischichtsysteme hinsichtlich Herstellungsaufwand und Kosten nachteilig. Als Schutz der Aufzeichnungsschicht kommt hier nur die Sandwichanordnung in Frage, da eine direkt aufgebrachte Schutzschicht die bereiche zwischen den Inseln bedecken würde, was zu einer Störung des Sinterprozesses führen würde.

Auch sind partikulare Aufzeichnungsschichten bekannt, deren Partikel dreidimensional in einer festen Matrix eingebettet sind. So werden in der JP-A 58 74 932 Aufzeichnungsschichten beschrieben, welche — wie aus den Beispielen ersichtlich — aus einer Anordnung elongierter Teilchen oder aber aus einem Mehrschichtenaufbau bestehen. Derartige Aufzeichnungsschichten weisen jedoch eine zu große Reflektivität und eine zu geringe Empfindlichkeit auf. Desweiteren wird in der US-A-4 343 879 eine Aufzeichnungsschicht beschrieben, die aus feinverteilten Silber-Teilchen in einer festen organischen Matrix besteht. Beim Schreibvorgang absorbieren die Silber-Teilchen die Laserstrahlung, die umgehende Materie wird aufgeheizt und schrumpft, wodurch die Reflexion der Schicht verändert wird. Die Silber-Teilchen dienen hier somit lediglich als Absorber, sie verändern sich beim Schreibprozeß nicht. Ähnlich verhalten sich die Aufzeichnungsschichten, die in US-A-4 188 214 offenbart sind. Hier sind Metallteilchen aus Au, Pt, Rh, Ag usw. in einer anorganischen Matrix aus Metallsulfiden, -fluoriden oder -oxiden eingebettet. Durch Laserbestrahlung wird die Matrix deformiert oder verdampft und es entsteht eine Markierung mit gegenüber der ursprünglichen Schicht veränderter Reflexion. Die so gekennzeichneten Aufzeichnungsschichten haben jedoch den Nachteil, daß zusätzlich zur Herstellung der Metallpartikel die Herstellung der Matrix und darüber hinaus eine Einlagerung der Partikel in die jeweilige Matrix erfolgen muß. Ferner sind stets neben den Eigenschaften der Partikel die Eigenschaften der Matrix zu berücksichtigen. Da der Schreibprozeß in diesen Medien auf einer Deformation der Matrix beruht, kann es insbesondere bei der anorganischen Matrix zu unerwünschtem Abplatzen des Matrixmaterials kommen.

Aufgabe der vorliegenden Erfindung war es daher, ein Verfahren zur Herstellung eines irreversiblen optischen Aufzeichnungsmediums bereitzustellen, das eine optische Aufzeichnung mit hoher Empfindlichkeit bei hohem Kontrast zwischen geschriebener Marke und ursprünglicher Schicht erlaubt sowie eine lange Lebensdauer durch Verwendung korrosionsstabiler Metalle sichert.

Es wurde nun gefunden, daß mit einem Verfahren zur Herstellung eines irreversiblen optischen Mediums zur Informationsspeicherung durch lokale Änderung der optischen Eigenschaften einer Aufzeichnungsschicht unter Einwirkung einer Lichtstrahlung mit einer Bestrahlungsstärke von 0,05 bis 10 nJ/$\mu$m², im wesentlichen bestehend aus einem Substrat und einer darauf aufgebrachten partikulären Aufzeichnungsschicht in einer Dicke von à,01 bis 10 $\mu$m aus einer dreidimensionalen Anordnung von Teilchen mit einem mittleren Teilchendurchmesser von 4 bis 40 nm sowie einer Porosiät, dem Quotienten des Schichtvolumens zur Summe der Volumina aller Teilchen der Schicht, von 2 bis 100 durch thermisches Aufdampfen eines Metalls oder einer Legierung in Gegenwart eines chemisch inerten Gases auf ein Substrat die Aufgabe gelöst werden kann, wenn bei einem Inertgasdruck zwischen 0,1 und 200 mbar die Verdampfertemperatur so eingestellt wird, daß der Dampfdruck des zu verdampfenden Metalls oder der Legierung 0,01 mbar bis 1 mbar beträgt.

Gemäß dem erfindungsgemäßen Verfahren werden die optischen Speicherschichten durch Verdampfung von Metallen in einer reduzierten Inertgasatmosphäre von 0,1 mbar bis 200 mbar erhalten. Es ist bekannt, daß auf diese Weise ultrafeine Pulver gebildet werden, indem das verdampfte Material durch Stöße mit den Inertgasatomen abgekühlt wird, wie z. B. von C. Granquist und R. Bahrman, J. Appl. Phys. Col. 47, Seite 2200 ff (1976) beschrieben. Es ist ferner bekannt, daß die Teilchengrößen der Pulver vom Inertgasdruck, von der Verdampfertemperatur und der Geometrie, d. h. der Lage von Auffangfläche zur Verdampferquelle abhängt. So wächst der Teilchendurchmesser mit wachsendem Inertgasdruck und/oder mit steigender Verdampfertemperatur an. Es wurde nun in überraschender Weise gefunden, daß das Niederschlagen der so in der Gasphase gebildeten Partikel zu der vorteilhaften optischen Speicherschicht führt, wenn die Abscheidung der Partikel auf ein vorgelegtes gekühltes Substrat in der Nähe des Verdampfers erfolgt. Die so hergestellten dreidimensionalen Schichten weisen eine hohe Porosität auf, wodurch die Schichten in hervorragender Weise für die Herstellung von irreversiblen optischen Aufzeichnungsmedien herangezogen werden können. Die Abscheidung partikulärer Au- und Ag-Schichten bei Ar-Drucken von 1 mbar bis 20 mbar engeben Porositäten von 10 bis 80, wobei die Porosität mit steigendem Inertgasdruck ansteigt. Die Verdampfertemperatur wird dabei erfindungsgemäß so gewählt, daß der Dampfdruck des verdampften Materials etwa 0,01 bis 1 mbar beträgt. Höhere Temperaturen führen zu uneinheitlichen Teilchengrößenspektren, da die Dampfdichte im Bereich des Verdampfers zu hoch ist. Niedrigere Temperaturen führen zu sehr kleinen Verdampfungsraten, die lange Beschichtungszeiten erforderlich machen.

Die erfindungsgemäß hergestellten Speichermedien zeichnen sich durch ihre Aufzeichnungsschicht aus, die aus einer dreidimensionalen Anordnung von Teilchen besteht. Diese sind äußerst feinteilig und haften vorwiegend durch Adhäsion zusammen. Da es sich um eine dreidimensionale Anordnung handelt sind Schichtdicke und Teilchendurchmesser voneinander unabhängig. Dies hat im Gegensatz zu den bekannten optischen Speichermedien mit Inselschichten den Vorteil einer beliebigen Variation der Reflektivität des Schichtsystems Reflektor/partikuläre Aufzeichnungsschicht allein durch Veränderung der Dicke der partikulären Schicht unter Beibehaltung des optimalen Teilchendurchmessers der schichtbildenden Teilchen. Zur Erzielung einer hohen Empfindlichkeit der Speicherschicht lassen sich in zweckmäßiger Weise stabile hochschmelzende Metalle, wie beispielsweise Gold, einsetzen.

Aufgrund der hohen Porosität der Aufzeichnungsschichten ist die thermische Leitfähigkeit sehr gering. Sie läßt sich in der gleichen Größenordnung halten, wie bei den Inselschichten bzw. bei den Schichten, die in einer festen Matrix angeordnete Teilchen aufweisen, ohne daß die bei diesen Aufzeichnungsschichten bekannten Nachteile in Kauf genommen werden müssen. Die Porosität wird bestimmt, indem die Dicke der partikulären Schicht mit dem Lichtmikroskop auf 0,5 $\mu$m genau gemessen wird. Bei extrem dünnen Schichten bietet sich die rasterelektronenmikroskopische Untersuchung einer Bruchkante an. Bei bekannter Schichtoberfläche ergibt sich so das Schichtvolumen. Das Volumen aller Teilchen in dieser Schicht folgt aus der gewichtsmäßigen Bestimmung des aufgebrachten Materials. Die Porosität ergibt sich dann als Quotient beider Größen. Die Porosität der erfindungsgemäß hergestellten Aufzeichnungsschichten ist 2 bis 100, vorteilhafterweise 10 bis 80. Die Teilchen der Aufzeichnungsschicht bestehen vorteilhafterweise aus einem korrosionsstabilen Metall oder einer entsprechenden Legierung. Als zweckmäßig hat es sich erwiesen, die Komponenten hierfür aus der Gruppe von Au, Pd, Pt, Rh, Ag, Cr und Cu auszuwählen. Sie weisen einen mittleren Teilchendurchmesser von 4 bis 40 nm, wobei insbesondere der Bereich von 5 bis 20 nm günstig ist. Neben den genannten Elementen läßt sich auch Aluminium verwenden, da diese Teilchen durch eine dünne Oxidschicht geschützt sind.

Als Substrate für die mit dem erfindungsgemäßen Verfahren hergestellten optischen Speichermedien eignen sich an sich alle festen Materialien, üblicherweise werden hierfür solche aus Metall, Keramik, Glas oder Kunststoff eingesetzt. Dieser große Spielraum bei der Auswahl ist besonders vorteilhaft, da für spezielle Anwendungswecke der Aufzeichnungsschichten im Gegensatz zu solchen mit Inselschichten auf Zwischenschichten zwischen Substrat und Aufzeichnungsschicht verzichtet werden kann.

Die einfachste Anordnung der erfindungsgemäß hergestellten Speicherschicht besteht aus Substrat und Aufzeichnungsschicht. Beim Schreibvorgang werden die Teilchen der partikulären Schicht durch Absorption der Laserstrahlung aufgeheizt und sie versintern zu größeren Einheiten, die Schicht schrumpft an dieser Stelle zusammen. Dadurch wird die Anzahl von Teilchen im betrachteten Bereich vermindert und es bildet sich als Marke ein Loch in der partikulären Schicht. An dieser Stelle ist die Schicht nun transparenter als die Umgebung. Da das versinterte Material meist zum Teil in dem Loch verbleibt und gegenüber den ursprünglichen Partikeln eine hohe Reflektivität aufweist, besitzt die Marke zusätzlich eine deutlich höhere Reflektivität als die ursprüngliche Schicht. Diese Anordnung kann mit einem laser beschrieben werden. Weiterhin kann die beschriebene Anordnung auch mit einer Blitzlampe großflächig belichtet werden, so daß beispielsweise auch Photographien hergestellt werden können.

Zum Schutz der partikulären Aufzeichnungsschicht gegen mechanische oder chemische Beschädigungen lassen sich diese entweder mit einer Schutzschicht versehen, die in direktem Kontakt mit der Aufzeichnungsschicht steht, oder sie wird mit einer Abdeckplatte versehen, die einen gewissen Abstand zur Aufzeichnungsschicht aufweist. Abdeckplatte und Substrat bilden dann eine sogenannte Sandwichanordnung. Der Lichteinfall beim Schreib-Lesevorgang kann nun entweder durch das Substrat oder durch die Schutzschicht/Schutzabdeckung erfolgen. Der erste Fall erfordert ein für die verwendete Laserstrahlung transparentes Substrat, der zweite Fall erfordet eine transparente Schutzschicht oder Schutzabdeckung. Für ein optisches Datenmedium ist es ferner vorteilhaft, die partikuläre Schicht auf der dem einfallenden Licht entgegengesetzten Seite mit einer kohärenten Metallschicht hoher Reflektivität zu hinterlegen. Neben der Konstrastverbesserung kann die Reflektorschicht für die Einstellung einer Restreflektivität des Mediums wichtig sein, die typischerweise 10 % beträgt und die für den Fokusservo des Schreib-Lesegerätes benötigt wird.

Auch können aufgrund der hohen Porosität der Aufzeichnungsschicht die Teilchen beim Schreibvorgang versintern, ohne daß die Schutzschicht eine Formveränderung erfährt, d. h. ohne daß es zu einer Verschlechterung der Empfindlichkeit der erfindungsgemäßen Aufzeichnungsschicht kommt, wie dies in nachteiliger Weise bei kohärenten Schichten und bei Inselschichten der Fall ist.

Die erfindungsgemäß hergestellten irreversiblen optischen Speichermedien zeichnen sich gegenüber solchen nach dem Stand der Technik dadurch aus, daß sie eine hohe Empfindlichkeit bei gleichzeitigem hohen Kontrast und eine lange Lebensdauer aufweisen. Vorteilhaft ist besonders die einfache Herstellweise und die einfache Einstellung der erforderlichen optischen Daten.

Die Erfindung wird anhand folgender Beispiele veranschaulicht.

Beispiel 1

Es wurde eine partikuläre Ag-Schicht auf einem Glassubstrat hergestellt. Die Verdampfertemperatur betrug 1 200°C, der Ar-Druck 5 mbar, der Abstand Verdampfer — Substrat 2 cm und die Verdampfungszeit 60 sec. Die erhaltene partikuläre Aufzeichnungsschicht bestand aus Ag-Teilchen mit Durchmessern von 10 nm. Die mit dem Lichtmikroskop bestimmte Schichtdicke betrug 5 $\mu$m und die aus dem Gewicht der abgeschiedenen Ag-Menge errechnete Dicke 0,17 $\mu$m, woraus sich eine Porosität von 30 ergab. Die Schichtoberfläche erschien unter dem Lichtmikroskop kuppig und die Reflektivität betrug im Wellenlängenbereich 0,3 bis 1,0 $\mu$m nur rund 1 %. Die Schicht wurde mit einem HeNe-Laser mit einer Energie von 4 nJ/Marke beschrieben. Die Pulsdauer betrug 200 nsec., die Leistung 20 mW und die Wellenlänge 0,64 $\mu$m. Die Fokussierung des Lasers auf ca. 1 $\mu$m erfolgte manuell. Die beschriebenen Marken waren kreisrunde, randscharfe Löcher mit einem Durchmesser von 1,5 $\mu$m. Die ultrafeinen Partikel versintern unter der Einwirkung des Laserstrahl und das versinterte Material lag auf der Oberfläche des Glassubstrates, also am Boden des zylinderförmigen Loches. Im reflektierten Licht erschienen die Marken als deutlich sichtbare helle Punkte. Eine Steigerung der Schreibenergie auf 27 nJ durch Verlängerung des Pulses auf 1,25 $\mu$sec führte zu einer sehr geringen Vergrößerung des Lochdurchmessers auf 2 $\mu$m, ein Beweis für die äußerst geringe thermische Leitfähigkeit der erfindungsgemäßen Aufzeichnungsschicht.

Beispiel 2

Es wurde eine partikuläre Au-Schicht auf einem Glassubstrat hergestellt. Die Verdampfertemperatur betrug 1 600 °C, der Ar-Druck 12 mbar und die Verdampfungszeit 40 sec. Die partikuläre Aufzeichnungsschicht bestand aus Au-Teilchen mit einem Durchmesser von 15 nm. Die Schichtdicke betrug 3 $\mu$m, die aus dem Gewicht der abgeschiedenen Au-Menge errechnete Dicke 0,06 $\mu$m, woraus sich eine Porosität von 50 ergab. Die Reflektivität lag im Wellenlängenbereich von 0,3 bis 1 $\mu$m unter 2 %. Die Schicht wurde mit dem HeNe-Laser mit einer Energie von 4 nJ/Marke beschrieben. Es bildeten sich kreisförmige Löcher mit einem Durchmesser von 1,5 $\mu$m, die bis auf das Glassubstrat reichten. Im zylinderförmigen Loch hatte sich ein Geflecht aus größeren Sinterprodukten gebildet, wie die Untersuchung mit dem Rasterelektronenmikroskop zeigte. Bei der höheren Schreibenergie von 27 nJ/Marke wurden die Löcher geringfügig größer und das versinterte Material bildete nicht länger ein Geflecht, sondern lag wie in Beispiel 1 auf dem Boden des Loches. Beide Arten von Markierungen erschienen im reflektierten Licht als helle, kreisrunde und randscharfe Punkte mit hohem Kontrast zur umgebenden partikulären Schicht.

**Beispiel 3**

Es wurde eine partikuläre Au-Schicht unterlegt mit einer Relfektorschicht auf einem Glassubstrat hergestellt. Auf ein Glassubstrat wurde eine 0,06 μm dicke kohärente Au-Schicht bei gutem Vakuum aufgedampft. Unter den gleichen Herstellungsbedingungen wie in Beipiel 2 wurde diese Reflektorschicht mit einer 5 μm dicken partikulären Au-Schicht versehen. Diese Aufzeichnungsschicht zeigte die gleiche Empfindlichkeit wie die im Beispiel 2 beschriebene. Der Laserpuls mit einer Energie von 4 nJ/Marke erzeugte kreisrunde Löcher in der partikulären Schicht mit einem Durchmesser von 1 μm. Bei einer Schreibenergie von 27 nJ/Marke betrug der Lochdurchmesser 1,5 μm. Die Reflektorschicht wurde freigelegt und der Kontrast zwischen Marke und umgebender Aufzeichnungsschicht war in reflektiertem Licht noch besser als im Falle der in Beispiel 2 hergestellten Aufzeichnungsschicht.

**Beispiel 4**

Auf ein Glassubstrat wurde eine ca. 0,06 μm dicke kohärente Ag-Schicht bei gutem Vakuum aufgedampft. Diese Reflektorschicht wurde im Gegensatz zu Beispiel 3 mit einer dünnen partikulären Au-Schicht als Aufzeichnungschicht versehen. Die Verdampfungstemperatur betrug 1 600 °C, der Ar-Druck 10 mbar und die Verdampfungszeit ca. 3 sec. Die Messung mit dem Lichtmikroskop ergab, daß die Schichtdicke unter der Nachweisgrenzen von 0,5 μm lag. Aufnahmen mit dem Transmissionselektronenmikroskop zeigten, daß die Schicht im Mittel aus mehr als 5 Lagen von Atomen bestand, woraus einer untere Grenze für die Schichtdicke von ca. 0,07 μm folgte, da die Teilchendurchmesser 15 nm betrugen. Durch diese dünne Schicht wurde die Reflektivität der Ag-Schicht bei der Wellenlänge 1 μm nur auf ca. 15 % gemindert. Das Schichtsystem hatte einen rötlichen Schimmer. Die Restreflexion von 15 % wurde gewählt, damit die automatische Fokussiereinrichtung des Schreib-Lese-Lasers im Infrarotlasermeßplatz gerade noch ansprechen konnte und andererseits der Kontrast von Marke zu umgebender Aufzeichnungsschicht möglichst hoch war. Dieses Schichtsystem wurde zusätzlich mit einer 1 mm starken Plexiglasabdeckung als Schutz gegen mechanische Beschädigung der partikulären Schicht versehen. Der Schreibvorgang erfolgt durch diese Schutzabdeckung. Die gemessene Empfindlichkeit war besser als 0,6 nJ/Marke. Die Sättigung lag bei 2 nJ/Marke. Die Wellenlänge des Lasers betrug 0,86 μm und die Leistung 12 mW.

**Beispiel 5**

Es wurden Schichten gemäß Beispiel 1 und 2 mit einem Diapositiv abgedeckt und mit einer Blitzenergie von ca. 15 nJ/μm² aus unmittelbarer Nähe belichtet. Man erhielt auf diese Weise deutliche und scharfe Kontaktkopien des Diapositivs.

Die stärker belichteten Partien der partikulären Schichten schrumpften stärker als die schwächer belichteten. Dadurch wurden sie transparenter im Durchlicht und stärker reflektierend im Auflicht. Diese Schichten ergaben gute Grauwertabstufungen.

**Patentanspruch**

Verfahren zur Herstellung eines irreversiblen optischen Mediums zur Informationsspeicherung durch lokale Änderung der optischen Eigenschaften einer Aufzeichnungsschicht unter Einwirkung einer Lichtstrahlung mit einer Bestrahlungsstärke von 0,05 bis 10 nJ/μm², im wesentlichen bestehend aus einem Substrat und einer darauf aufgebrachten partikulären Aufzeichnungsschicht in einer Dicke von 0,01 bis 10 μm aus einer dreidimensionalen Anordnung von Teilchen mit einem mittleren Teilchendurchmesser von 4 bis 40 nm sowie einer Porosität, dem Quotienten des Schichtvolumens zur Summe der Volumina aller Teilchen der Schicht, von 2 bis 100 durch thermisches Aufdampfen eines Metalls oder einer Legierung in Gegenwart eines chemisch inerten Gases auf ein Substrat, dadurch gekennzeichnet, daß bei einem Inertgasdruck zwischen 0,1 und 200 mbar die Verdampfertemperatur so eingestellt wird, daß der Dampfdruck des zu verdampfenden Metalls oder der Legierung 0,01 mbar bis 1 mbar beträgt.

**Claim**

A process for the preparation of an irreversible optical medium for storing information by local modification of the optical properties of a recording layer under the action of a light beam with an irradiance of from 0.05 to 10 nJ/μm², consisting essentially of a substrate and, applied atop thereof, a particulate reording layer from 0.01 to 10 μm thick of a three-dimensional arrangement of particles having a mean particle diameter of from 4 to 40 nm, and of a porosity, ie. the quotient of the layer volume and the sum of the volumes of all particles in the layer, of from 2 to 100, by thermally applying a metal or alloy to a substrate by vapor deposition in the presence of a chemically inert gas, wherein, at an inert gas pressure of from 0.1 to 200 mbar, the evaporator temperature is set so that the vapor pressure of the metal or alloy to be vaporized is from 0.01 to 1 mbar.

**Revendication**

Procédé de préparation d'un milieu optique irréversible pour le stockage d'informations par modification locale des propriétés optiques d'une couche d'enregistrement sous l'action d'un rayonnement lumineux à une puissance de rayonnement de 0,05 à 10 nJ/μm², consistant essentiellement en un substrat sur lequel on a appliqué une couche d'enregistrement formée de particules, à une épaisseur de 0,01 à 10 μm, avec disposition tridimentionnelle des particules ayant un diamètre moyen de 4 à 40 nm et une porosité, c'est-à-dire le quotient du volume de la couche par la somme des volumes de toutes les particules de la couche, de 2 à 100, par déposition à la chaleur de vapeurs d'un métal ou d'un alliage en présence d'un gaz chimiquement inerte sur un substrat, caractérisé par le fait que, à une pression de gaz inerte de 0,1 à 200 mbar, on règle la température de vaporisation de manière que la pression de vapeur du métal ou alliage à vaporiser soit de 0,01 mbar à 1 mbar.